# DEMANDE DE BREVET EUROPEEN

(11) **EP 4 386 967 A1**
(43) Date de publication de la demande: **19.06.2024**
(21) Numéro de dépôt: 23216436.8
(22) Date de dépôt: 13.12.2023
(51) Int. Cl.: H01M 50/505, H01M 50/51, H01M 50/213, H01M 50/264, H01M 50/503, H01M 50/507, H01M 50/512

(54) **MODULE DE BATTERIE OU PACK-BATTERIE, COMPRENANT UNE PLURALITÉ D'ACCUMULATEURS DE FORMAT CYLINDRIQUE AGENCÉS EN PARALLÈLES LES UNS AUX AUTRES, ASSEMBLÉS PAR EMMANCHEMENT DANS UN FLASQUE DE BRIDAGE SUPPORTANT LES BUSBARS DES BORNES DE SORTIE DES ACCUMULATEURS**

(30) Priorité: 13.12.2022 FR 2213280
(71) Demandeur: Commissariat à l'énergie atomique et aux énergies alternatives, 75015 Paris (FR)
(72) Inventeur: DE PAOLI, Lionel, 38054 GRENOBLE CEDEX 09 (FR); MEE, Fabrice, 38054 GRENOBLE CEDEX 09 (FR)
(74) Mandataire: Cabinet Nony

(57) **Abrégé**

L'invention consiste à réaliser un module de batterie dont les accumulateurs sont bridés mécaniquement et connectés électriquement par une partie de leur hauteur, avantageusement à l'une de leurs extrémités longitudinales, au moyen d'un ensemble monobloc comprenant un seul flasque rigide en matériau isolant électriquement sur lequel est(sont) fixé(s) ou réalisé(s) intégralement un (deux) busbars de connexion des bornes de sortie de même polarité..

## Description

### Domaine technique

La présente invention concerne le domaine des accumulateurs électrochimiques, et plus particulièrement à des accumulateurs métal-ion.

L'invention vise principalement à proposer une solution fiable et aisée de montage réversible, c'est-à-dire qui permette un démontage, d'accumulateurs agencés au sein d'un module ou d'un pack-batterie.

Bien que décrite en référence à un accumulateur Lithium-ion, l'invention s'applique à tout accumulateur électrochimique métal-ion, c'est-à-dire également les accumulateurs sodium-ion, Magnésium-ion, Aluminium-ion...ou de manière plus générale à tout accumulateur électrochimique.

Un module ou pack-batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

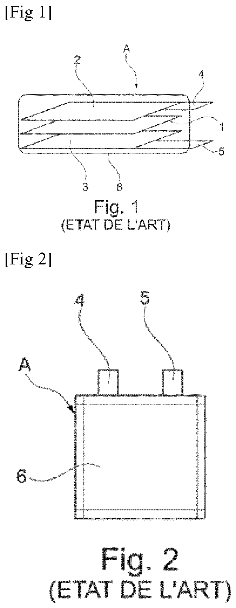

Telle qu'illustrée schématiquement en figures 1 et 2, une batterie ou accumulateur lithium-ion comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles comporte une anode, une cathode et un électrolyte. Plusieurs types de géométrie d'architecture conventionnelle sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄, LiCoO₂, LiNi_{0.33}Mn_{0.33}Co_{0.33}O₂.

L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide utilisé est constitué d'un boitier métallique, typiquement en acier inoxydable (inox 316L ou inox 304) ou en aluminium (A1 1050 ou A1 3003), ou encore en titane.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boitiers ont également déjà été réalisées par bobinage autour d'un mandrin prismatique.

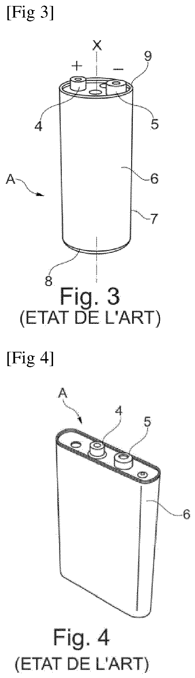

Un des types de boitier rigide de forme cylindrique, usuellement fabriqué pour un accumulateur Li-ion de forte capacité, est illustré en figure 3.

Un boitier rigide de forme prismatique est également montré en figure 4.

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 est en général serti au niveau d'une gorge de sertissage 60. Le couvercle 9 supporte les pôles ou bornes de sortie du courant 4, 5. Une des bornes de sortie (pôles), par exemple la borne négative 5 est soudée sur le couvercle 9 tandis que l'autre borne de sortie, par exemple la borne positive 4, passe à travers le couvercle 9 avec interposition d'un joint non représenté qui isole électriquement la borne positive 4 du couvercle.

Une autre configuration possible est qu'une des bornes de sortie (pôles), par exemple la borne positive 4, fait saillie et passe à travers le couvercle 9 avec interposition d'un joint non représenté qui isole électriquement la borne positive 4 du couvercle. Dans cette configuration la borne positive 4 en saillie du couvercle 9 définit une gorge périphérique 90. L'autre borne de sortie, par exemple la borne négative 5, est constituée par le fond et donc l'enveloppe latérale du boitier 6 qui est connectée électriquement.

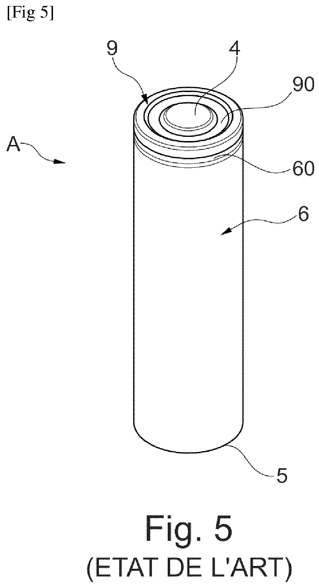

Cette configuration illustrée à la figure 5 est par exemple celle que l'on rencontre typiquement dans les accumulateurs existants de format 18650, 21700 ou 4680.

Le type de boitier rigide largement fabriqué consiste également en un godet embouti et un couvercle, soudés entre eux sur leur périphérie. En revanche, les collecteurs de courant comprennent une traversée avec une partie faisant saillie sur le dessus du boitier et qui forme une borne aussi appelée pôle apparent de la batterie.

Un pack batterie P est constitué d'un nombre variable d'accumulateurs pouvant atteindre plusieurs milliers qui sont reliés électriquement en série et/ou en parallèle entre eux et généralement par des barres de connexion, appelées usuellement busbars.

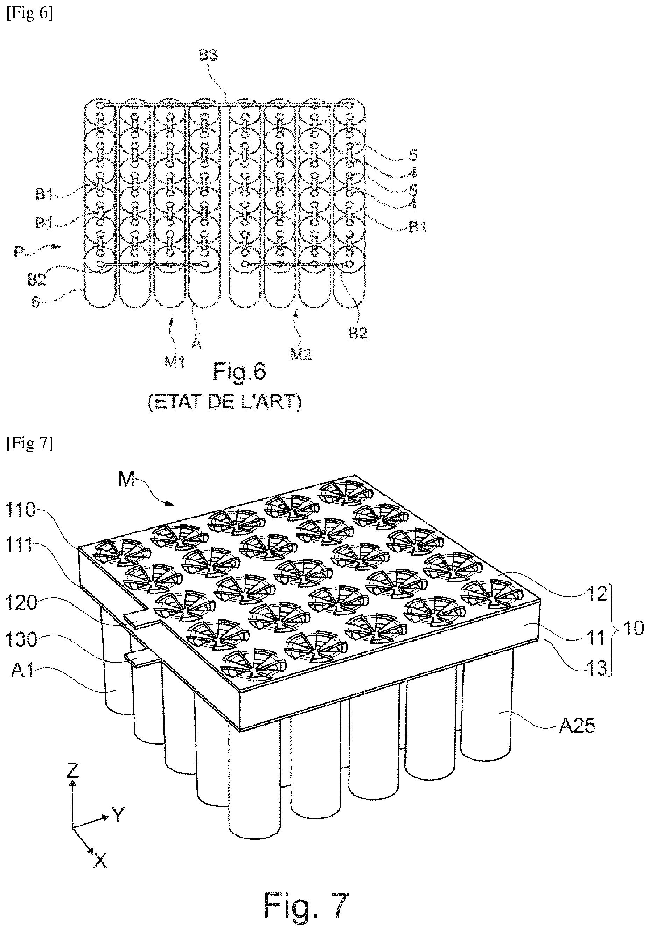

Un exemple de pack-batterie P est montré en figure 6. Ce pack est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égal à six accumulateurs Li-ion.

Comme représenté, la connexion mécanique et électrique entre deux accumulateurs Li-ion d'une même rangée est réalisée par vissage de busbars B1, avantageusement en cuivre, reliant chacune une borne positive 4 à une borne négative 5. La connexion entre deux rangées d'accumulateurs en parallèle au sein d'un même module M1 ou M2 est assurée par un busbar B2, également avantageusement en cuivre. La connexion entre les deux modules M1, M2 est assurée par un busbar B3, également avantageusement en cuivre.

Une des problématiques actuelles consiste à proposer des modules de batterie qui permettent des montages et démontages des accumulateurs individuellement de manière sécurisée et rapide autant pour des considérations de maintenance que de recyclabilité.

La possibilité de pouvoir réutiliser l'ensemble des composants non électrochimiques d'un module de batterie et remplacer uniquement l'un ou l'autre des accumulateurs qui le constituent permet de garantir une durée de vie plus longue au module que les modules ou pack-batteries existants.

Autrement exprimé, pouvoir remplacer dans un module de batterie uniquement les accumulateurs individuellement à souhait, de manière rapide et sécurisée garantit un réel avantage économique pour l'utilisateur final.

Différentes solutions ont été proposées à cette fin.

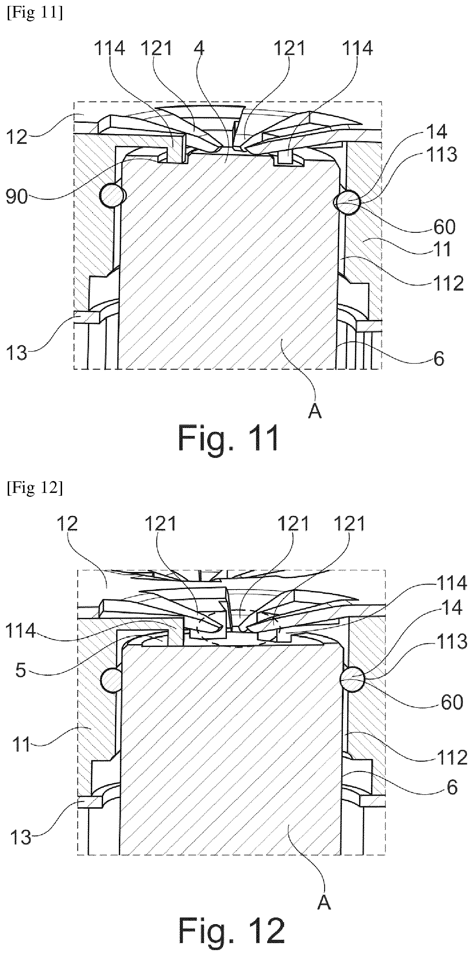

La demande de brevet FR2920913A1 divulgue un module avec un casier séparateur à alvéoles pour loger séparément les accumulateurs cylindriques du module, qui est agencé entre deux panneaux de contact électrique formant chacun un busbar, et un système de visserie pour fixer le tout. Dans le mode de réalisation de la figure 12, la fixation des bandes de contact est assurée par embrochement sur des ergots avec des ressorts en regard de chaque borne d'accumulateur. Bien que démontable, le module selon cette demande est complexe et long à assembler et à démonter notamment du fait de la multitudes des vis nécessaires, avec en outre un volume et une masse totale du module importants.

Le brevet US10497912B2 propose quant à lui un système de maintien des accumulateurs cylindriques à deux flasques à visser l'un par rapport à l'autre et des languettes élastiques mises en place à la manière d'un tiroir. Cette solution souffre des mêmes inconvénients que celle selon la demande FR2920913A1.

La demande de brevet CN109037514A propose quant à elle un module de batterie dont les accumulateurs cylindriques sont indexés par deux supports de part et d'autre intégrés chacun dans un flasque, les connectiques étant réalisées par les bornes aux extrémités des accumulateurs. Ici, le module comprend un très grand nombre de pièces qui peuvent rendre l'assemblage du module complexe et son démontage long et fastidieux.

Le modèle d'utilité CN204243140U propose un module de batterie avec un support sous la forme d'une ossature parallépipédique dans laquelle les accumulateurs cylindriques sont maintenus et avec des busbars formant des interconnexions aux bornes à chaque extrémité d'un accumulateur avec un agencement pour une mise en série. Le support tel que divulgué rajoute nécessairement de la masse et de l'encombrement et les busbars d'interconnexions peuvent être complexes à réaliser.

La demande de brevet US 2014/0234686 A1, comprenant un module de batterie à accumulateurs cylindriques dont les bornes de sortie sont agencées aux deux extrémités longitudinales, un dissipateur de chaleur formé d'un matériau thermiquement conducteur, une interface thermique agencée entre l'une des extrémités des accumulateurs, et le dissipateur de chaleur, et une interface électrique collée par point à l'interface thermique. Dans ce module, la gestion thermique du module est réalisé au moyen d'éléments supplémentaires, et la facilité d'assemblage et la démontabilité ne sont pas réellement démontrées.

En résumé, les modules de batterie ou pack-batterie existants sont tous complexes, coûteux et peuvent présenter un volume et une masse totale notables . En outre, s'ils ne peuvent proposer un démontage, celui-ci n'est pas de fait aisé et rapide et nécessite l'utilisation d'outils tels que des outils de dévissage. Enfin, la gestion thermique est réalisée au moyen d'éléments qui ne simplifient ni l'assemblage ni le démontage.

Il existe donc un besoin pour améliorer les solutions d'intégration d'accumulateurs de format cylindrique au sein d'un module de batterie ou de pack-batterie, notamment afin d'assurer un assemblage sûr des accumulateurs sans outil, tout en permettant un démontage et une gestion thermique aisés et sans que cela ne nuise au poids et à l'encombrement pour préserver les performances du module ou du pack.

Le but de l'invention est de répondre au moins en partie à ce besoin.

### Exposé de l'invention

Pour ce faire, l'invention concerne, sous l'un de ses aspects, un module batterie comprenant :
- une pluralité d'accumulateurs électrochimiques, chaque accumulateur étant à emballage rigide sous la forme d'un boitier, agencés parallèles les uns aux autres;
- un ensemble monobloc de bridage mécanique et de connexion électrique comprenant :
   - un flasque rigide en matériau isolant électrique, comprenant intérieurement une pluralité de logements qui s'étendent chacun selon une partie de la hauteur du flasque et une pluralité de moyens de bridage mécanique d'accumulateur dont au moins un est agencé dans chaque logement;
   - au moins une plaque de connexion électrique formant un busbar, adaptée pour connecter électriquement les bornes de sortie d'une même polarité des accumulateurs entre elles, le busbar s'étendant parallèlement à l'une des faces principales du flasque rigide et comprenant une pluralité de languettes qui s'étend dans au moins un des logements du flasque rigide, de préférence dans chaque logement, pour former chacune un point de contact électrique avec l'une des bornes de sortie d'une même polarité d'un des accumulateurs, lorsqu'une partie de la hauteur dudit accumulateur est emmanchée dans un des logements et qu'elle est bridée par le moyen de bridage mécanique logé dans ledit logement.

Selon une configuration, chaque accumulateur est de format cylindrique. Le bridage mécanique est alors de préférence réalisé avec un centrage de chaque accumulateur dans un des logements du flasque rigide.

Selon un mode de réalisation avantageux, le module comprend deux busbars dont l'un est adapté pour connecter électriquement les bornes de sortie positive des accumulateurs entre elles tandis que l'autre est adapté pour connecter électriquement les bornes de sortie négative des accumulateurs entre elles.

Selon ce mode, et une première variante avantageuse de l'invention, un des deux busbars épouse une des deux faces principales du flasque tandis que l'autre des deux busbars épouse l'autre des deux faces principales du flasque. Seul le flasque rigide fait office d'isolant électrique entre les deux busbars.

Selon ce mode, et une deuxième variante avantageuse, le module comprend l'empilement suivant :
- un des deux busbars, épousant une des deux faces principales du flasque,
- une plaque intercalaire en matériau isolant électrique, épousant le busbar,
- l'autre des busbars épousant la plaque intercalaire. Bien que rajoutant une pièce d'isolation électrique, cette deuxième variante a pour avantages de rendre le module encore plus compact, de faciliter sa fabrication par le laminage possible des deux busbars avec la plaque intercalaire, et d'augmenter encore la sécurité de fonctionnement.

Chaque busbar est fixé de préférence par collage, notamment par point, par surmoulage, collage, bouterollage, sur le flasque rigide ou le cas échéant sur la plaque intercalaire, ou réalisé par fabrication additive avec le flasque rigide ou le cas échéant avec la plaque intercalaire.

Selon un autre mode de réalisation avantageux, le moyen de bridage mécanique est un moyen de compression élastique. Un moyen de compression élastique autorise une dispersion de tolérance de fabrication au diamètre de boitier d'accumulateur, présente une bonne tenue aux chocs et vibrations et assure un bon guidage avec centrage et bridage mécanique d'accumulateur.

Avantageusement, il peut s'agir d'un joint torique monté dans une gorge réalisée dans le logement, d'une languette ou d'une lame, notamment flexible,. Une lame peut également réaliser un bridage par friction mécanique. La languette peut être directement fabriquée au sein du flasque notamment par impression additive.

Selon une variante de réalisation avantageuse, chaque accumulateur comprend une gorge de sertissage de son couvercle dans laquelle le joint torique est compressé élastiquement pour réaliser le bridage mécanique.

Selon une structure avantageuse, la borne de sortie d'une polarité, notamment la polarité négative, d'au moins un des accumulateurs est connectée électriquement à son boitier, une languette du busbar de connexion est flexible en étant agencée vers l'intérieur d'un des logements pour former un point de contact électrique contre une partie de l'enveloppe latérale dudit boitier.

De préférence, il est prévu un nombre de quatre languettes flexibles réparties, de préférence régulièrement angulairement, vers le logement, en tant que points de contact électrique avec l'enveloppe latérale du boitier. Ce nombre de quatre points de contact répartis, de préférence régulièrement, permet une redondance et une homogénéité de circulation de courant sur la circonférence de l'enveloppe latérale du boitier d'accumulateur.

Selon une autre structure avantageuse, la borne de sortie d'une polarité, notamment la polarité positive, d'au moins un des accumulateurs fait saillie à une de ses extrémités longitudinales, une languette du busbar de connexion est flexible en étant agencée vers l'intérieur d'un des logements pour former un point de contact électrique avec la borne en saillie.

De préférence, comprenant un nombre de cinq languettes flexibles réparties, de préférence régulièrement angulairement, à la périphérie du logement, en tant que points de contact électrique avec la borne de sortie en saillie. Ce nombre de cinq points de contact répartis, de préférence régulièrement, permet une redondance et une homogénéité de circulation de courant depuis la borne de sortie en saillie d'accumulateur.

Selon une variante avantageuse de réalisation, la borne de sortie en saillie définit une gorge périphérique par rapport au boitier, le flasque rigide comprend au moins une patte rigide de détrompage agencée dans le logement de sorte que son extrémité libre vienne se loger dans la gorge périphérique pour garantir le détrompage. Ainsi, en cas de tentative de montage « à l'envers » d'un accumulateur, c'est-à-dire en cas d'emmanchement de son extrémité longitudinale ne comprenant pas la borne en saillie, la(les) patte(s) de détrompage empêche(nt) la connexion électrique entre les points de contacts électrique qui s'étendent à l'intérieur du logement. Avec un tel détrompage, on empêche tout risque de court-circuit lors du montage d'un accumulateur dans l'ensemble monobloc.

Selon une configuration de module avantageuse, le module comprend une plaque d'étanchéité agencée sur l'un des deux busbars épousant une des deux faces principales du flasque de sorte à constituer avec le moyen de bridage mécanique une zone étanche dans le logement autour de la partie d'accumulateur bridé mécaniquement, afin d'éjecter celui-ci de son logement par son dégazage induit par son emballement thermique et par-là à le déconnecter électriquement du module. En ce qui concerne le phénomène d'emballement thermique, on se reportera à la publication [1] et au protocole décrit dans cette publication. Les températures dites «d'auto-échauffement» et « d'emballement thermique » sont respectivement notées T1 et T2 dans cette publication.

La température T1, typiquement 70°C, dans la figure 2 de la publication, est la température à partir de laquelle l'accumulateur s'échauffe sans source externe à une vitesse typique de 0,02 °C/min en conditions adiabatiques.

La température T2, typiquement 150°C, dans la figure 2 de la publication, est la température à partir de laquelle l'accumulateur s'échauffe à une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min.

Avantageusement, la partie de la hauteur d' accumulateur emmanchée dans un des logements et bridée par le moyen de bridage mécanique logé dans ledit logement est inférieure à 30%, de préférence comprise entre 20 et 30% de la hauteur d'accumulateur.

Ainsi, l'invention consiste essentiellement à réaliser un module de batterie dont les accumulateurs sont bridés mécaniquement et connectés électriquement par une partie de leur hauteur, avantageusement à l'une de leurs extrémités longitudinales, au moyen d'un ensemble monobloc comprenant un seul flasque rigide en matériau isolant électriquement sur lequel est(sont) fixé(s) ou réalisé(s) intégralement un (deux) busbars de connexion des bornes de sortie de même polarité.

Au final, l'invention apporte de nombreux avantages parmi lesquels on peut citer:
- un montage/démontage efficace, sécurisé, aisé et rapide à réaliser sans outil de chaque accumulateur d'un module ou pack-batterie, par une simple action mécanique par emmanchement/désemmanchement dudit accumulateur qui la maintient dans ou la dégage de son logement du flasque. En d'autres termes, un bridage/débridage mécanique de chaque accumulateur par une simple action de type « push-pull», avec un centrage automatique et une localisation facilitée,
- une connexion électrique de chaque accumulateur simultanée à son montage dans le flasque qui supporte les deux busbars de polarité opposée,
- une grande compacité d'un module de batterie à plusieurs accumulateurs de format cylindrique grâce à l'ensemble monobloc de bridage et de connexion électrique,
- des connectiques de puissance (busbars) aisément déconnectables,
- la possibilité de remplacement rapide et aisé d'un accumulateur usagé,
- la possibilité de la réutilisation des composants non électrochimiques du module de batterie, augmentant de fait sa durée de vie,
- la gestion des tolérances de fabrication de chaque accumulateur par le montage par maintien par emmanchement
- une gestion thermique optimisée et flexible dans la partie non emmanchée dans l'ensemble monobloc de bridage mécanique et connexion électrique,
- la possibilité de rassembler et concentrer les circuits de puissance pour un management électronique optimisé du module et limiter les longueurs de section de câble électrique ou busbars,
- la possibilité de faire le bridage mécanique sous tension des accumulateurs.

Pour une application à un module ou un pack-batterie Li-ion, chaque accumulateur est un accumulateur Li-ion dans lequel :
- le matériau d'électrode(s) négative(s) est choisi dans le groupe comportant le graphite, le lithium, l'oxyde de titanate Li₄TiO₅O_{12;}
- le matériau d'électrode(s) positive(s) est choisi dans le groupe comportant LiFePO₄, LiCoO₂, LiNi_{0.33}Mn_{0.33}Co_{0.33}O₂.

D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion avec son emballage souple selon l'état de l'art.
[Fig 3] la figure 3 est une vue en perspective d'un accumulateur lithium-ion selon l'état de l'art avec son emballage rigide constitué d'un boitier de forme cylindrique.
[Fig 4] la figure 4 est une vue en perspective d'un accumulateur lithium-ion selon l'état de l'art avec son emballage rigide constitué d'un boitier de forme prismatique.
[Fig 5] la figure 5 est une vue en perspective d'une configuration d'accumulateur lithium-ion selon l'état de l'art avec son emballage rigide constitué d'un boitier de forme cylindrique avec une borne de sortie en saillie à l'une de ses extrémités longitudinales, l'autre borne de sortie étant constituée par le fond du boitier.
[Fig 6] la figure 6 est une vue en perspective d'une pluralité d'accumulateurs lithium-ion de géométrie cylindrique selon l'état de l'art, regroupés deux modules de batterie reliés électriquement au moyen de barres de liaison électrique pour former un pack-batterie.
[Fig 7] la figure 7 est une vue en perspective d'un module de batterie à pluralité d'accumulateurs lithium-ion de géométrie cylindrique selon l'invention.
[Fig 8] la figure 8 est une vue en coupe longitudinale du module selon la figure 7.
[Fig 8A] la figure 8A est une vue de détail de la figure 8.
[Fig 9] [Fig 10] les figures 9 et 10 sont des vues en perspective de busbars respectivement de polarité positive et négative tels qu'ils sont implantés dans un ensemble monobloc à flasque rigide selon l'invention.
[Fig 11] la figure 11 est une vue de détail en coupe longitudinale montrant une variante avantageuse de réalisation d'un flasque rigide avec pattes de détrompage pour garantir le détrompage d'un accumulateur lors de son montage par emmanchement dans un flasque rigide.
[Fig 12] la figure 12 reprend la figure 11 mais en illustrant un montage incorrect de l'accumulateur avec les pattes de détrompage empêchant sa connexion électrique à un busbar.
[Fig 13] la figure 13 est une vue de dessus de la configuration selon la figure 11.
[Fig 14] la figure 14 est une vue en perspective illustrant une variante de réalisation d'un ensemble monobloc de bridage mécanique et de connexion électrique avec les deux busbars d'un côté du flasque rigide, séparés l'un de l'autre par une plaque intercalaire en matériau isolant électrique.
[Fig 15] la figure 15 est une vue en coupe longitudinale montrant une variante de réalisation d'un moyen de bridage mécanique par friction au moyen d'une lame métallique contre le boitier d'un accumulateur emmanché dans un logement du flasque rigide.
[Fig 16] la figure 16 est une vue en perspective d'un module de batterie selon l'invention montrant la possibilité de montage par emmanchement depuis le haut dans le flasque rigide.
[Fig 17] la figure 17 est une vue de détail en perspective et en coupe longitudinale illustrant une variante de réalisation définissant une zone d'étanchéité entre l'accumulateur et l'ensemble monobloc qui permet l'auto-éjection de l'accumulateur en cas d'emballement thermique.
[Fig 18] la figure 18 est une vue de détail en coupe longitudinale illustrant la zone d'étanchéité de la figure 17.

### Description détaillée

Les figures 1 à 6 sont relatives à des exemples différents d'accumulateur Li-ion, d'emballages souples et boitiers d'accumulateurs ainsi qu'un pack-batterie selon l'état de l'art.

Ces figures 1 à 6 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 18.

Dans l'ensemble de la demande, un module de batterie est défini dans une position par rapport à un repère orthogonal XYZ constituant un trièdre, comprenant trois axes perpendiculaires deux à deux, à savoir :
- un axe X, définissant une direction transversale,
- un axe Y, définissant une direction transversale, qui avec l'axe X définit un plan XY,
- un axe Z, définissant une direction longitudinale, perpendiculaire au plan XY, et définissant la direction générale selon laquelle les accumulateurs s'étendent.

Dans l'ensemble de la présente demande, les termes « inférieur », « supérieur », « bas », « haut », « dessous » et « dessus » sont à comprendre par référence par rapport à des boitiers d'accumulateurs Li-ion agencés à la verticale.

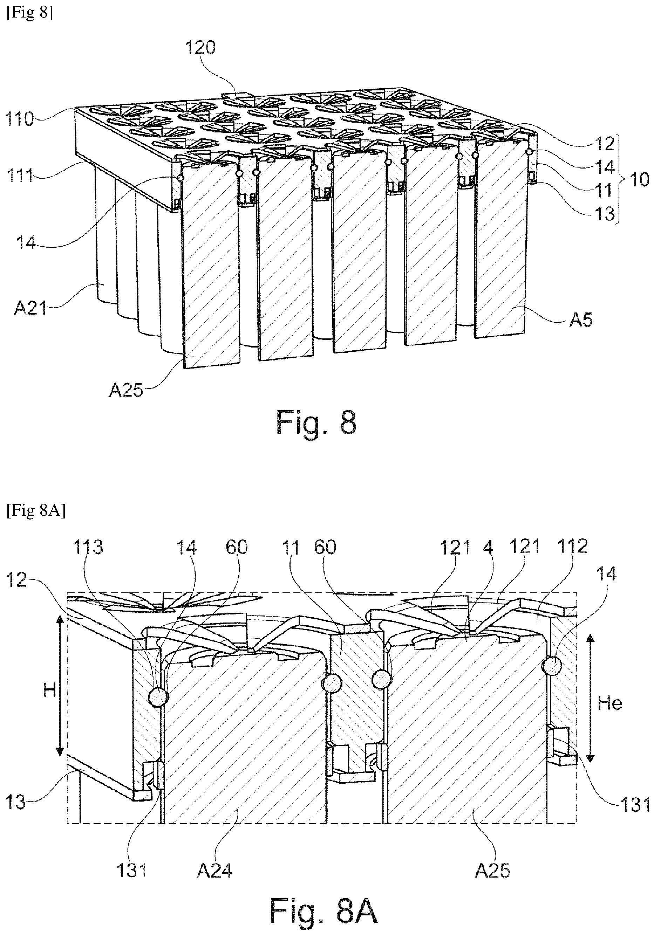

On a représenté en figures 7, 8 et 8A, un exemple de module M d'un pack-batterie d'accumulateurs Li-ion, A1, A2,...,A25.

Dans les exemples illustrés, les accumulateurs A1-A25 illustrés sont à boitiers 6 de format cylindrique, typiquement de format 18650 ou 21700.

Les accumulateurs A1-A25 sont agencés parallèles les uns aux autres. Dans les exemples illustrés, le nombre d'accumulateurs agencés parallèles entre eux est de 25 mais il va de soi qu'un nombre inférieur ou supérieur convient dans le cadre de l'invention.

Selon l'invention, le module M comprend un ensemble monobloc de bridage mécanique et de connexion électrique 10 de tous les accumulateurs A1-A25.

Cet ensemble comprend un flasque rigide 11 en matériau isolant électrique, de type PA 6.6, PEEK ou PEHD.

Ce flasque rigide 10 sous la forme générale d'un parallélépipède droit comprend deux faces principales 110, 111 parallèles entre elles et intérieurement une pluralité de logements 112 qui s'étendent chacun selon la hauteur du flasque H, typiquement de l'ordre de 15 mm pour des accumulateurs de format 18650

Dans chaque logement 112 est agencé un moyen de bridage mécanique d'accumulateur sous la forme d'un joint torique 14.

Deux plaques de connexion électrique 12, 13 formant chacune un busbar (12, 13) sont fixées ou réalisées intégralement avec le flasque rigide 11 pour former l'ensemble monobloc.

Typiquement, l'un et/ou l'autre de ces busbars 12, 13 est constitué en aluminium, acier nickelé ou en cuivre.

Chacun de ces deux busbars 12, 13 est adapté pour connecter électriquement les bornes de sortie d'une même polarité 4 ou 5 des accumulateurs entre elles. Dans l'exemple illustré, le busbar 12 connecte toutes les bornes de polarité positive 4 des accumulateurs A1-A25 qui font saillie à travers le couvercle de leur boitier 6 toute en étant isolées électriquement de celui-ci.

Le busbar 13 connecte toutes les bornes de polarité négative 5 des accumulateurs A1-A25 qui sont constituées par le fond de leur boitier 6 et donc à leur enveloppe latérale de leur boitier 6 qui est connectée électriquement.

Dans l'exemple illustré des figures 7 à 8A, le busbar 12 épouse la face principale 110 du flasque 11 tandis que le busbar 13 épouse l'autre des deux faces principales 111 du flasque.

Chacun des deux busbars 12, 13 comprend une languette de connexion 120, 130 pour la sortie électrique, qui fait saillie à l'extérieur de l'ensemble monobloc. Comme montré, les deux languettes de connexion de sortie 120, 130 sont parallèles et font saillie d'un même côté de l'ensemble 10. On peut aussi envisager que l'une fasse saillie sur un côté et l'autre sur n'importe quel autre côté de l'ensemble 10.

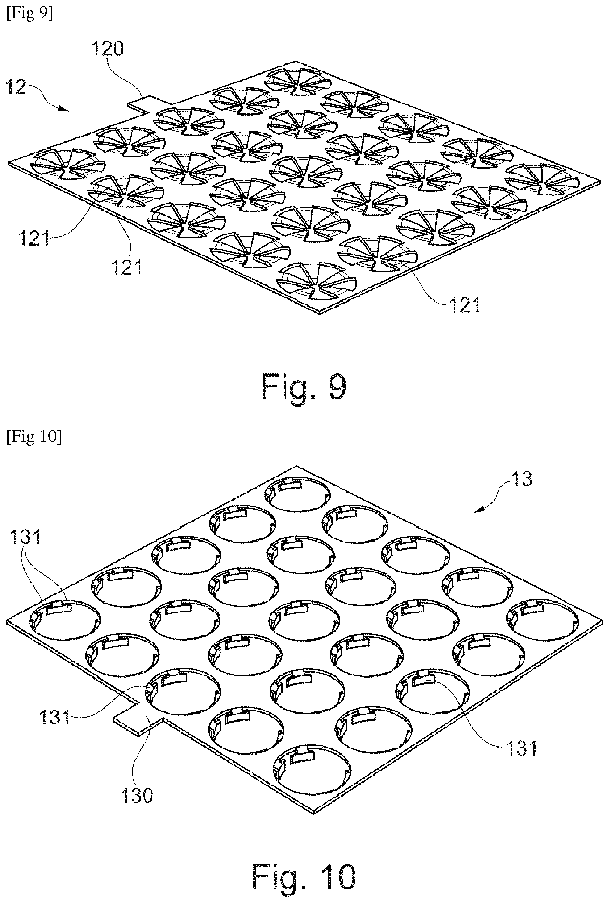

Comme illustré à la figure 9, le busbar 12 de connexion des bornes de sortie positive 4 comprend, pour chaque accumulateur, un nombre de cinq languettes flexibles 121 de contact, destinées à être réparties régulièrement angulairement à la périphérie d'un logement 112, en tant que points de contact électrique avec la borne de sortie en saillie. Ce nombre de cinq points de contact 121 répartis régulièrement, permet une redondance et une homogénéité de circulation de courant depuis la borne de sortie 4.

Comme illustré à la figure 10, le busbar 13 de connexion des bornes de sortie négative 5 comprend, pour chaque accumulateur, un nombre de quatre languettes flexibles 131 de contact, destinées à être réparties régulièrement angulairement dans un logement 112, en tant que points de contact électrique avec l'enveloppe latérale du boitier 6. Ce nombre de quatre points de contact 131 répartis régulièrement permet une redondance et une homogénéité de circulation de courant sur la circonférence de l'enveloppe latérale du boitier 6.

La figure 8A illustre en détail le bridage mécanique et les connexions électriques réalisées entre accumulateurs A1-A25 par le flasque rigide 11 et les busbars 12, 13.

Comme montré sur cette figure 8A, une partie de la hauteur He d'un accumulateur est emmanchée dans un des logements 112 et cette partie de hauteur et donc tout l'accumulateur est bridée par le joint torique 14 logé dans le logement 112 qui est compressé à la fois dans une gorge 113 du flasque dans laquelle il est monté et la gorge de sertissage 60 existante sur les accumulateurs A1-A25.

L'emmanchement et la compression du joint 14 sont réalisés de sorte que, pour chaque accumulateur A1-A25, la borne de sortie positive 4 soit en contact avec toutes les languettes 121 du busbar 12 et que l'enveloppe latérale du boitier 6 connectée à la borne de sortie 5 sur le fond du boitier soit en contact avec toutes les languettes 131 du busbar 13. Ainsi les connexions électriques entre toutes les bornes de sortie positives 4 des accumulateurs A1-A25 sont reliées électriquement entre elles par le busbar 12 et tous les bornes de sortie négative 5 sont reliées entre elles par le busbar 13.

Pour chaque accumulateur A1-A25, la compression du joint 14 ainsi que le contact entre l'enveloppe latérale du boitier 6 et les languettes 131 réalisent le centrage et le bridage mécanique de l'accumulateur dans le logement 112 du flasque rigide 11 dans lequel il a été emmanché par simple action de poussée.

Un désemmanchement par simple action de tirée de l'accumulateur vers l'extérieur du flasque 11 réalise la déconnexion mécanique et électrique avec les deux busbars 12, 13.

Une variante avantageuse de réalisation est montrée en figures 11 à 13 : elle consiste en un détrompage qui évite de monter un accumulateur A1-A25 à l'envers, c'est-à-dire en inversant le sens des bornes de sortie 4, 5 à connecter électriquement aux busbars 12, 13. Selon cette variante, le flasque rigide 11 comprend au moins une, de préférence plusieurs pattes rigides 113 de détrompage qui sont agencée dans un logement 112 de sorte que leur extrémité libre vienne se loger dans la gorge périphérique 90 de la borne de sortie positive 4 en saillie par rapport au boitier 6. pour garantir le détrompage.

Ainsi, comme montré à la figure 12, en cas de tentative de montage à l'envers d'un accumulateur, c'est-à-dire en cas d'emmanchement par son fond, sa borne de sortie négative 5 constituée par le fond plat du boitier 6 vient en contact direct avec l'extrémité libre des pattes de détrompage 114 et la hauteur de cette dernière empêche tout contact physique avec les extrémités des languettes 121, comme schématisé par la ligne en pointillés, et donc tout contact électrique entre l'accumulateur et le busbar 12. Autrement dit, ce détrompage empêche tout risque de court-circuit lors du montage d'un accumulateur A dans l'ensemble monobloc 10.

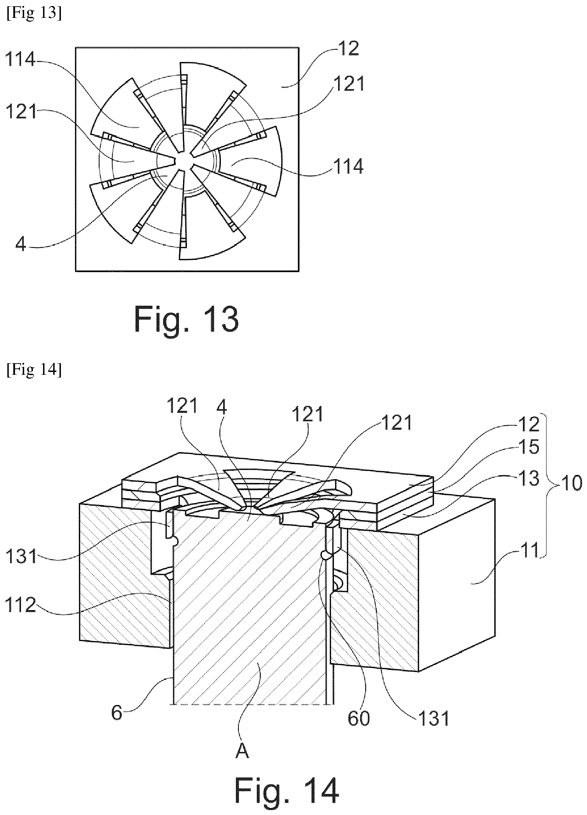

La figure 13 illustre une imbrication optimale de chaque patte de détrompage 114 entre deux languettes de contact électrique 121 adjacentes.

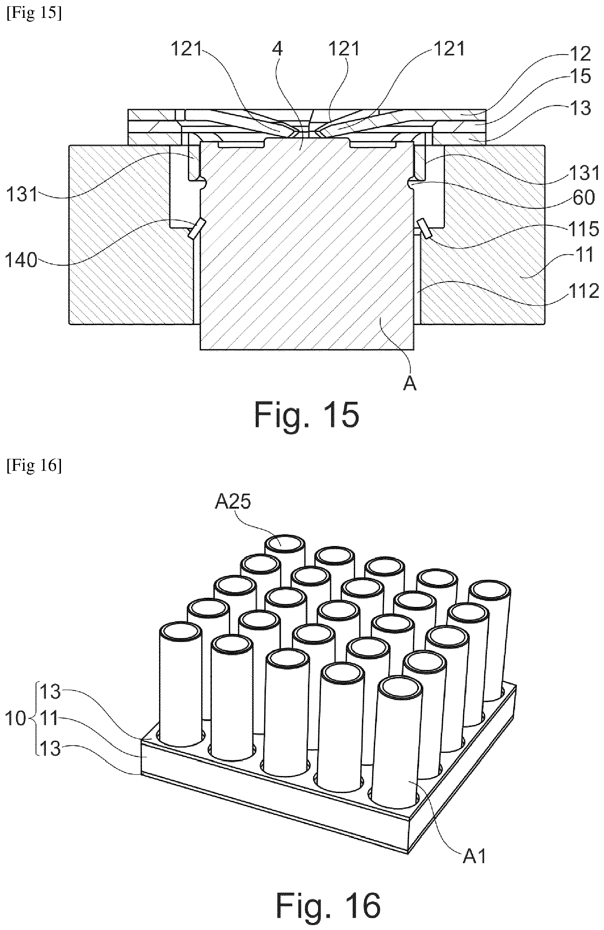

Une configuration alternative des busbars 12, 13 relativement au flasque rigide 11 est montrée aux figures 14 et 15.

Ici, on forme un empilement en agençant une plaque intermédiaire 15 en matériau isolant électrique 15 entre les deux busbars 12, 13, empilement que l'on agence sur un seul côté du flasque 11 avec le busbar de connexion 13 qui épouse l'une des deux faces principales 110 ou 111 du flasque 11. L'isolation électrique entre les deux busbars 12, 13 et leurs languettes de contact électrique 121, 131 est assurée par l'épaisseur de la plaque intercalaire 15, en matériau de type époxy ou polyimide préférentiellement d'épaisseur 300 µm.

L'empilement réalisé 13, 15, 12 et son agencement permettent de rendre le module M encore plus compact, de faciliter sa fabrication par le laminage possible des deux busbars 12, 13 avec la plaque intercalaire 15, et d'augmenter encore la sécurité de fonctionnement.

La figure 15 illustre également une alternative au joint torique 14 logé dans la gorge de sertissage 60, en tant que moyen de bridage mécanique : ici, une lame flexible 140 agencée dans une gorge 115 prévue à cet effet dans le flasque 11 permet un bridage par friction mécanique. Le bridage mécanique par friction peut faciliter le montage des accumulateurs dans le flasque 11 que l'on peut poser sur un support, les accumulateurs A1-A25 étant alors emmanchés individuellement ou collectivement depuis le dessus, soit manuellement soit à l'aide d'une machine automatique, comme montré à la figure 16.

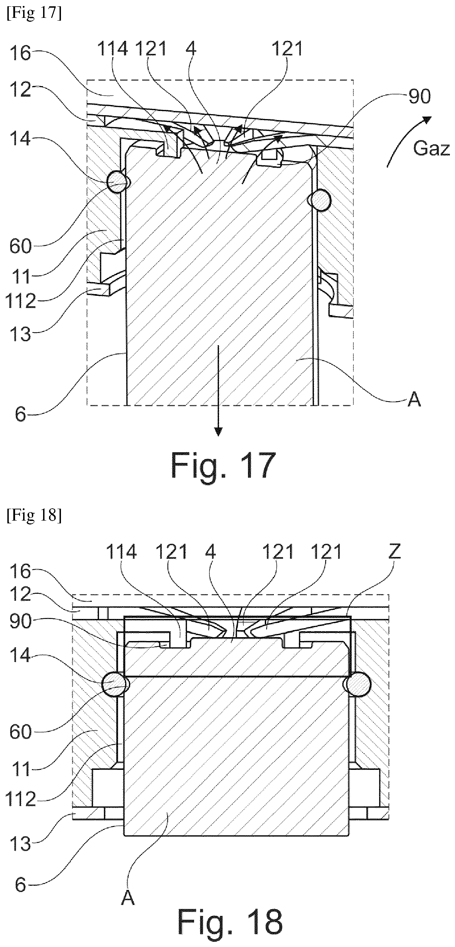

Une autre variante avantageuse de réalisation est illustrée aux figures 17 et 18. On peut agencer une plaque d'étanchéité 16 sur le dessus busbar 12 épousant l'une des deux faces principales 110 ou 111 par co-laminage par exemple. Les matériaux peuvent être de type Nomex d'épaisseur 500µm colaminés à un époxy d'épaisseur 1mm par exemple.

Ainsi, cette plaque d'étanchéité 16 forme avec le joint torique 14 une zone étanche Z dans le logement 112 autour de la partie d'un accumulateur A qui y est bridé mécaniquement. Par-là, en cas d'emballement thermique de l'accumulateur A, les gaz générés qui vont s'échapper du boitier 6 selon les flèches du haut de la figure 17 vont induire une surpression entre la plaque 16 et l'accumulateur A du fait de la zone étanche Z. Cette surpression va induire une force sur l'accumulateur dans le sens de son désemmanchement au moins partiel du logement 112, comme selon la flèche du bas de la figure 17 et ainsi éjecter l'accumulateur A de son logement 112. Cela provoque ainsi la déconnexion électrique de l'accumulateur A au moins du busbar 12 et donc du module M. Autrement exprimé, la plaque d'étanchéité 16 qui définit la zone étanche Z permet une auto-déconnexion électrique voire une auto-éjection d'un accumulateur en emballement thermique par son dégazage induit.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si dans les exemples illustrés, la borne de sortie 4 en saillie à une extrémité longitudinale d'un boitier 6 d'accumulateur est la borne positive et la borne de sortie 5 constituée par un fond de boitier 6 est la borne négative, on peut bien évidemment mettre en oeuvre l'invention avec des bornes inversées, i.e. la borne 4 en tant que borne négative et la borne 5 en tant que borne positive.

D'autres moyens de bridage mécanique et agencements peuvent être envisagés au sein du flasque rigide 11 de l'ensemble monobloc10.

Si dans les exemples illustrés, le boitier 6 est de forme cylindrique, on peut envisager une forme prismatique.

### Liste des références citées:

[1]: Xuning Feng, et al. « Thermal runaway mechanism of lithium-ion battery for electric vehicles: A review», Energy Storage Materials, Volume 10, January 2018, Pages 246-267.

## Revendications

1. Module de batterie (M) comprenant:
- une pluralité d'accumulateurs électrochimiques (A1, A2...A30), chaque accumulateur étant à emballage rigide sous la forme d'un boitier (6), agencés parallèles les uns aux autres;
- un ensemble monobloc de bridage mécanique et de connexion électrique (10) comprenant :
• un flasque rigide (11) en matériau isolant électrique, comprenant intérieurement une pluralité de logements (112) qui s'étendent chacun selon la hauteur du flasque et une pluralité de moyens (14, 140) de bridage mécanique d'accumulateur dont au moins un est agencé dans chaque logement;
• deux plaques de connexion électrique formant chacune un busbar (12, 13), adaptée pour connecter électriquement les bornes de sortie d'une même polarité (4 ou 5) des accumulateurs entre elles, l'un des busbars étant adapté pour connecter électriquement les bornes de sortie positive des accumulateurs entre elles tandis que l'autre des busbars est adapté pour connecter électriquement les bornes de sortie négative des accumulateurs entre elles, les busbars s'étendant chacun parallèlement à l'une des faces principales (110) du flasque rigide et comprenant une pluralité de languettes (121, 131) qui s'étend dans au moins un des logements, de préférence dans chaque logement du flasque rigide pour former chacune un point de contact électrique avec l'une des bornes de sortie d'une même polarité (4 ou 5) d'un des accumulateurs, lorsqu'une partie de la hauteur (He) dudit accumulateur est emmanchée dans un des logements et qu'elle est bridée par le moyen de bridage mécanique logé dans ledit logement, la borne de sortie d'une polarité (5), notamment la polarité négative, d'au moins un des accumulateurs étant connectée électriquement à son boitier (6), une languette (131) d'un busbar de connexion (13) étant flexible en étant agencée vers l'intérieur d'un des logements (112) pour former un point de contact électrique contre une partie de l'enveloppe latérale dudit boitier, la connexion électrique de chaque accumulateur étant simultanée à son montage dans le flasque qui supporte les deux busbars de polarité opposée, un désemmanchement par simple action de tirée de l'accumulateur vers l'extérieur du flasque (11) réalisant la déconnexion mécanique et électrique avec les deux busbars (12, 13).

2. Module de batterie selon la revendication 1, chaque accumulateur étant de format cylindrique.

3. Module de batterie selon la revendication 1 ou 2, un des deux busbars (12) épousant une des deux faces principales (110) du flasque tandis que l'autre des deux busbars (13) épouse l'autre des deux faces principales (111) du flasque.

4. Module de batterie selon la revendication 1 ou 2, comprenant l'empilement suivant :
- un des deux busbars (13), épousant une des deux faces principales (110) du flasque,
- une plaque intercalaire (15) en matériau isolant électrique, épousant le busbar
- l'autre des busbars (12) épousant la plaque intercalaire.

5. Module de batterie selon l'une des revendications précédentes, chaque busbar étant fixé de préférence par collage, notamment par point, par surmoulage, collage, bouterollage, sur le flasque rigide ou le cas échéant sur la plaque intercalaire, ou réalisé par fabrication additive avec le flasque rigide ou le cas échéant avec la plaque intercalaire.

6. Module de batterie selon l'une des revendications précédentes, le moyen de bridage mécanique étant un moyen de compression élastique.

7. Module de batterie selon la revendication 6, le moyen de compression élastique étant un joint torique (14) monté dans une gorge réalisée dans le logement ou une languette ou lame, notamment flexible (140).

8. Module de batterie selon la revendication 7, chaque accumulateur comprenant une gorge de sertissage (60) de son couvercle dans laquelle le joint torique (14) est compressé élastiquement pour réaliser le bridage mécanique.

9. Module de batterie selon l'une des revendications précédentes, comprenant un nombre de quatre languettes flexibles (131) réparties, de préférence régulièrement angulairement, vers le logement, en tant que points de contact électrique avec l'enveloppe latérale du boitier.

10. Module de batterie selon l'une revendications précédentes, la borne de sortie d'une polarité (4), notamment la polarité positive, d'au moins un des accumulateurs faisant saillie à une de ses extrémités longitudinales, une languette (121) du busbar de connexion (12) étant flexible en étant agencée vers l'intérieur d'un des logements pour former un point de contact électrique avec la borne en saillie.

11. Module de batterie selon la revendication 10, comprenant un nombre de cinq languettes flexibles (121) réparties, de préférence régulièrement angulairement, à la périphérie du logement, en tant que points de contact électrique avec la borne de sortie en saillie.

12. Module de batterie selon la revendication 10 ou 11, la borne de sortie en saillie définissant une gorge périphérique (90) par rapport au boitier, le flasque rigide comprenant au moins une patte rigide de détrompage (113) agencée dans le logement, de sorte que son extrémité libre vienne se loger dans la gorge périphérique pour garantir le détrompage.

13. Module de batterie selon l'une des revendications précédentes, comprenant une plaque d'étanchéité (16) agencée sur l'un des deux busbars épousant une des deux faces principales du flasque de sorte à constituer avec le moyen de bridage mécanique une zone étanche (Z) dans le logement (112) autour de la partie d'accumulateur bridé mécaniquement afin d'éjecter celui-ci de son logement par son dégazage induit par son emballement thermique et par-là à le déconnecter électriquement du module.

14. Module de batterie selon l'une des revendications précédentes, la partie de la hauteur d'accumulateur emmanchée dans un des logements et bridée par le moyen de bridage mécanique logé dans ledit logement étant inférieure à 30%, ce préférence comprise entre 20 et 30% de la hauteur d'accumulateur.

15. Module de batterie selon l'une des revendications précédentes, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O_{12;}
- le matériau d'électrode(s) positive(s) est choisi dans le groupe comportant LiFePO₄, LiCoO₂, LiNi_{0.33}Mn_{0.33}Co_{0.33}O₂.
